(19) **Europäisches Patentamt / European Patent Office / Office européen des brevets**

(11) **EP 2 612 003 B1**

(12) **EUROPEAN PATENT SPECIFICATION**

(45) Date of publication and mention
of the grant of the patent:
**04.05.2016 Bulletin 2016/18**

(21) Application number: **11822213.2**

(22) Date of filing: **24.08.2011**

(51) Int Cl.:
*F01N 3/20* $^{(2006.01)}$    *F02D 41/02* $^{(2006.01)}$
*F01N 13/00* $^{(2010.01)}$    *F01N 11/00* $^{(2006.01)}$
*F01N 3/023* $^{(2006.01)}$    *F01N 9/00* $^{(2006.01)}$
*F01N 3/035* $^{(2006.01)}$

(86) International application number:
**PCT/SE2011/051015**

(87) International publication number:
**WO 2012/030278 (08.03.2012 Gazette 2012/10)**

(54) **METHOD AND SYSTEM FOR EXHAUST CLEANING**

ABGASREINIGUNGSVERFAHREN UND -SYSTEM

PROCÉDÉ ET SYSTÈME DE NETTOYAGE DES EFFLUENTS GAZEUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.08.2010 SE 1050887**

(43) Date of publication of application:
**10.07.2013 Bulletin 2013/28**

(73) Proprietor: **Scania CV AB**
**151 87 Södertälje (SE)**

(72) Inventors:
- **KARLSSON, Carl-Johan**
  **S-112 40 Stockholm (SE)**
- **TELBORN, Klas**
  **S-152 71 Södertälje (SE)**

(74) Representative: **Scania CV AB**
**Patents, GP 117kv**
**151 87 Södertälje (SE)**

(56) References cited:
**EP-A1- 1 437 493**    **DE-A1- 10 223 427**
**US-A1- 2003 131 592**    **US-A1- 2003 131 592**
**US-A1- 2007 056 270**    **US-B1- 6 405 528**

## Description

### Field of the invention

The present invention relates to particle filters and in particular to a method for estimation of an ash level in a particle filter according to the preamble of claim 1. The invention relates also to a system adapted to making an estimate of an ash level in a particle filter according to the preamble of claim 19. The invention relates also to a computer programme for applying the method and to a vehicle which is provided with the system.

### Background to the invention

Growing official concern about pollution and air quality, especially in urban areas, has led to the adoption of emission standards and rules in many jurisdictions.

Such emission standards often set requirements which define acceptable limits for exhaust discharges from vehicles equipped with combustion engines. These standards often regulate, for example, levels of discharge of nitrogen oxides ($NO_x$), hydrocarbons (HC), carbon monoxide (CO) and particles from most types of vehicles.

The endeavour to meet such emission standards has led to ongoing research with a view to reducing emissions by means of post-treatment (cleaning) of the exhaust gases which arise from combustion in a combustion engine.

One way to post-treat exhaust gases from a combustion engine is a so-called catalytic cleaning process, so vehicles and many other at least large means of transport powered by combustion engines are usually also provided with at least one catalyst.

Post-treatment systems may also, either alternatively or in combination with one or more catalysts, comprise other components, e.g. particle filters. There are also cases where particle filters and catalysts are integrated with one another.

Combustion of fuel in the cylinders of a combustion engine results in the formation of soot particles. Particle filters are used to capture these soot particles, and work in such a way that the exhaust flow is led through a filter structure whereby soot particles are captured from the passing exhaust flow and are stored in the particle filter.

The particle filter fills with soot progressively during vehicle operation, and has sooner or later to be emptied of it, which is usually achieved by so-called regeneration. Regeneration involves the soot particles, which mainly consist of carbon particles, being converted to carbon dioxide and/or carbon monoxide in one or more chemical processes, which regeneration may in principle be effected in two different ways. One way is regeneration by so-called oxygen ($O_2$) based regeneration, also called active regeneration. In active regeneration, fuel is added to the exhaust gases and is intended to burn up in an oxidation catalyst situated upstream from the particle filter. In active regeneration, carbon is converted by oxygen to carbon dioxide and water.

This chemical reaction requires relatively high particle filter temperatures for desired reaction rates (filter emptying rates) to be achieved at all.

US2003/0131592 discloses a regenerating apparatus for internal combustion engine particle filters comprising control means for selectively performing a partial and a perfect regenerating process according to PM deposit amount and ash deposit amount values.

Instead of active regeneration, it is possible to apply $NO_2$ based regeneration, also called passive regeneration. In passive regeneration, nitrogen oxides and carbon oxides are formed by a reaction between carbon and nitrogen dioxide. The advantage of passive regeneration is that desired reaction rates, and hence the rate at which the filter is emptied, can be achieved at significantly lower temperatures.

The particle filter is very dense, causing a very large proportion of the particles reaching the filter to become trapped in it. The great bulk of the particles which reach the filter comprise soot particles formed during the combustion in the engine, but from that combustion they are also accompanied by residues of oil. These oil residues also comprise a small content of ash, typically about 0.5-2%, mainly consisting of magnesium sulphate.

Ash cannot be burnt by, for example, regeneration of the particle filter but will instead accumulate in the filter. All particles which accumulate in the filter contribute to increased pressure drop across the filter, resulting in greater fuel consumption.

The amount of ash thus deposited also depends on various parameters which may vary greatly, e.g. the condition of the engine and/or the exhaust cleaning system, making it very difficult to predict what the ash level in the filter will be at a specific time. Nor is it normally easy to determine the ash level in the particle filter by measuring the pressure drop across it, since it is not possible to tell how much of the pressure drop is due to the soot load and how much to the ash deposition.

## Summary of the invention

An object of the present invention is to propose a method for estimating an ash level in a particle filter. This object is achieved by the aforesaid method according to the characterising part of claim 1. The object is also achieved by the aforesaid system according to the characterising part of claim 19. This object is also achieved by the aforesaid computer programme and the aforesaid vehicle.

The present invention solves the problem of uncertainty about how much of the backpressure in the particle filter is caused by its soot content and how much by its ash content. As the soot accounts for the great bulk of the deposits in the filter, it is difficult to estimate how much ash the filter contains.

The invention uses the fact that ash measurement is possible if the filter is substantially empty of soot, since the backpressure in the filter, will mainly depend on the ash in the filter during a limited period when the filter contains no soot.

The present invention utilises this by initiating at an appropriate time a total regeneration of the particle filter so that it becomes substantially clear of soot, and by thereafter initiating estimation of the ash level in it. Assurance is thus afforded of being able to estimate a reliable and correct value for the amount of soot in the filter, resulting in a more robust estimate and a more robust exhaust cleaning system. The present invention determines the appropriate time as being when partial regeneration has been unsuccessful, i.e has not reduced the soot load to its desired regenerated value, for a predetermined number of times. This predetermined number of times according to the invention is at least once. The appropriate time is thus determined as being when at least one partial regeneration has been unsuccessful.

Accordingly, it is possible during normal operation of the vehicle to monitor how successful the partial regenerations are, and if a predetermined number of them are unsuccessful the present invention initiates estimation of an ash level in the filter after a total regeneration of the soot in it.

Applying the present invention avoids the deposition of high ash levels in the particle filter without the vehicle's control system being aware of the ash. This makes it possible for the fuel consumption to be monitored and controlled, since increased backpressure in the filter increases it.

Continuous monitoring according to the present invention of possible accumulation of ash in the filter makes it possible to determine appropriate times for filter servicing, which are otherwise very difficult to determine because of different ash contents in different oils, possible leakage via the turbo and different general characteristics of different engines. Being able to determine appropriate times for filter servicing exactly is economically advantageous, since such servicing entails not only significant service costs but also vehicle downtime. Being able also to conduct this continuous monitoring during operation of the vehicle is regarded as very desirable in minimising the number of vehicle downtimes.

Further characteristics of the present invention and advantages thereof are indicated by the detailed description set out below of embodiment examples and the attached drawings.

## Brief description of the drawings

Fig. 1a    depicts a power train of a vehicle in which the present invention may with advantage be used.

Fig. 1b    depicts an example of a control unit in a vehicle control system.

Fig. 2    depicts an example of a post-treatment system of a vehicle in which the present invention may with advantage be used.

Fig. 3a    depicts an example of soot load and regeneration of a particle filter.

Fig. 3b    depicts an example of soot load and regeneration of a particle filter.

Fig. 4    is a flowchart for a method according to the invention.

## Detailed description of preferred embodiments

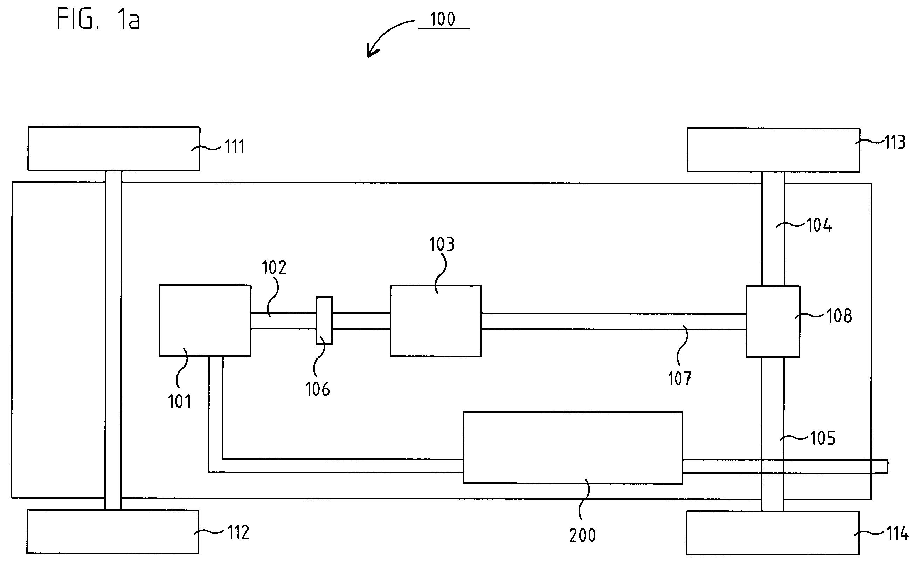

Fig. 1a depicts schematically a heavy vehicle 100, e.g. a truck, bus or the like, according to an example of an embodiment of the present invention. The vehicle 100 schematically depicted in Fig. 1a comprises a pair of forward wheels 111, 112 and a pair of powered rear wheels 113, 114. The vehicle further comprises a power train with a combustion engine 101 connected in a conventional way, by an output shaft 102 of the engine 101, to a gearbox 103, e.g. via a clutch 106.

An output shaft 107 from the gearbox 103 drives the powered wheels 113, 114 via a final gear 108, e.g. a conventional differential, and driveshafts 104, 105 which are connected to said final gear 108.

The vehicle 100 further comprises a post-treatment system/exhaust cleaning system 200 for treatment (cleaning) of exhaust discharges from the engine 101.

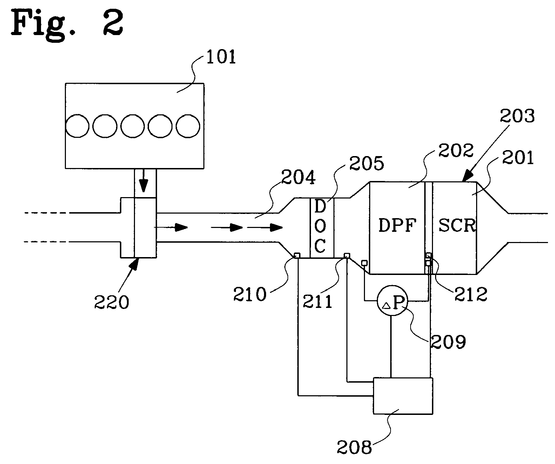

The post-treatment system is depicted in more detail in Fig. 2. The diagram illustrates the engine 101 of the vehicle 100, in which the exhaust gases generated by the combustion are led via a turbo unit 220 (in turbo engines the exhaust flow arising from the combustion often drives a turbo unit used to compress the incoming air for the combustion in the cylinders). The function of turbo units is very well known and is therefore not described in more detail here. The exhaust flow is then led via a pipe 204 (indicated by arrows) to a particle filter 202 via an oxidation catalyst (diesel oxidation catalyst, DOC) 205.

The post-treatment system further comprises an SCR (selective catalytic reduction) catalyst 201 situated downstream of the particle filter 202 (diesel particulate filter, DPF). SCR catalysts use ammonia ($NH_3$), or a compound from which ammonia can be generated/formed, as additive for reducing the amount of nitrogen oxides $NO_x$.

The particle filter 202 may alternatively be situated downstream of the SCR catalyst 201, although this may be less advantageous in cases where the present invention relates to so-called passive regeneration which is dependent on the nitrogen oxides which are usually reduced by the SCR catalyst. According to an embodiment of the present invention, the post-treatment system does not comprise an SCR catalyst at all.

The oxidation catalyst DOC 205 has several functions and utilises the surplus air to which the diesel engine process generally gives rise in the exhaust flow as a chemical reagent in conjunction with a noble metal coating in the oxidation catalyst. The catalyst is normally used primarily to oxidise remaining hydrocarbons and carbon monoxide in the exhaust flow to carbon dioxide and water.

The oxidation catalyst may however also oxidise to nitrogen dioxide ($NO_2$ a large proportion of the nitrogen monoxides (NO) present in the exhaust flow. This nitrogen dioxide is then utilised in passive regeneration according to the present invention. Further reactions may also take place in the oxidation catalyst.

In the embodiment depicted of the exhaust cleaning system, DOC 205, DPF 202 and also the SCR catalyst 201 are integrated in a combined exhaust cleaning unit 203. It should however be noted that DOC 205 and DPF 202 need not be integrated in a combined exhaust cleaning unit but may instead be arranged in some other way found appropriate. For example, DOC 205 may be situated nearer to the engine 101. The SCR catalyst may likewise be separate from DPF 202 and/or DOC 205.

The exhaust cleaning system set-up depicted in Fig. 2 usually occurs in heavy vehicles, at least in jurisdictions where stringent emission requirements apply, but as an alternative to the oxidation catalyst the particle filter may instead be provided with noble metal coatings so that the chemical processes which would occur in the oxidation catalyst occur instead in the particle filter, and the exhaust cleaning system therefore has no DOC 205.

As previously mentioned, the combustion in the engine 101 results in the formation of soot particles. These soot particles need not, and are in many cases not allowed to, be discharged into the surroundings of the vehicle. Diesel particles consist of hydrocarbons, carbon (soot) and inorganic substances such as sulphur and ash. As mentioned above, these soot particles are therefore captured by the particle filter 202, which works in such a way that the exhaust flow is led through a filter structure in which soot particles are captured from the passing exhaust flow in order to be stored in the filter 202. A very large proportion of the particles may be separated from the exhaust flow by the filter 202.

The particles thus separated from the exhaust flow therefore accumulate in the filter 202, causing it to fill with soot over time. Depending on factors such as current driving conditions, the driver's mode of driving and the vehicle's load, a larger or smaller amount of soot particles will be generated, so this filling will take place more or less quickly, but when the filter reaches a certain level of filling it needs "emptying". If the filter is full to too high a level the vehicle's performance may be affected and there may also be fire hazards due to soot accumulation in combination with high temperatures.

As above, emptying the particle filter 202 is done by regeneration whereby soot particles, carbon particles, are converted in a chemical process to carbon dioxide and/or carbon monoxide. Over time the filter 202 has therefore to be regenerated at more or less regular intervals, and determining suitable times for its regeneration may for example be by means of a control unit 208 which may for example determine a suitable time or times at least partly on the basis of signals from a pressure sensor 209 which measures the differential pressure across the filter. The fuller the filter 202 becomes, the higher the pressure difference across it will be.

Determination of regeneration timing may also be affected by current temperatures before and/or after the oxidation catalyst 205 and/or before and/or after the filter 202. These temperatures may for example be determined by means of temperature sensors 210-212.

No regeneration action is normally taken so long as the filter's filling level remains below some predetermined level. For example, the control system's control of filter regeneration may be so arranged that no action is taken so long as the filter's degree of filling is for example below some suitable level within the range 60-80%. The degree of filling may be estimated in any suitable way, e.g. on the basis of differential pressure as above, in which case a certain pressure difference will represent a certain degree of filling.

The control unit 208 also controls the estimation of the ash level in the particle filter according to the present invention, as described in more detail below.

Generally, control systems in modern vehicles usually comprise a communication bus system consisting of one or more communication buses for connecting together a number of electronic control units (ECUs), or controllers, and various components located on the vehicle. Such a control system may comprise a large number of control units, and the responsibility for a specific function may be divided among two or more of them.

For the sake of simplicity, Fig. 2 depicts only the control unit 208, but vehicles of the type depicted often have a relatively large number of control units, e.g. for control of engine, gearbox etc., as is well known to specialists within the technical field.

The present invention may therefore be implemented in the control unit 208 but may also be implemented wholly or partly in one or more other control units with which the vehicle is provided.

Control units of the type depicted are normally adapted to receiving sensor signals from various parts of the vehicle, e.g., as depicted in Fig. 2, said pressure sensor 209 and temperature sensors 210-212, and also, for example, an engine control unit (not depicted). The control signals generated by control units normally depend also both on signals from other control units and on signals from components. For example, the control exercised by the control unit 208 over regeneration according to the present invention may for example depend on information received for example from the engine control unit and the temperature/pressure sensors depicted in Fig. 2.

Control units of the type depicted are also usually adapted to delivering control signals to various parts and components of the vehicle, e.g. in the present example to the engine control unit to demand/order control of the engine's combustion as below.

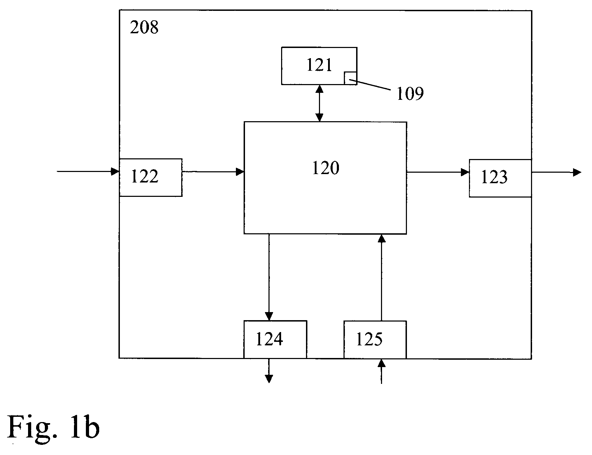

The control is often governed by programmed instructions. These instructions take typically the form of a computer programme which, when executed in a computer or control unit, causes the computer/control unit to effect desired forms of control action, e.g. method steps according to the present invention. The computer programme usually takes the form of a computer programme product 109 which is stored on a digital storage medium 121 (see Fig. 1b), e.g. ROM (read-only memory), PROM (programmable read-only memory), EPROM (erasable PROM), flash memory, EEPROM (electrically erasable PROM), a hard disc unit etc., in or connected to the control unit, and which is executed by the control unit. The vehicle's behaviour in a specific situation may thus be adjusted by altering the computer programme's instructions.

An example of a control unit (the control unit 208) is depicted schematically in Fig. 1b, which control unit 208 may itself comprise a calculation unit 120 which may take the form of substantially any suitable type of processor or microcomputer, e.g. a circuit for digital signal processing (Digital Signal Processor, DSP), or a circuit with a predetermined specific function (Application Specific Integrated Circuit, ASIC). The calculation unit 120 is connected to a memory unit 121 which provides it with, for example, the stored programme code 109 and/or the stored data which the calculation unit 120 needs for it to be able to perform calculations. The calculation unit 120 is also arranged to store partial or final results of calculations in the memory unit 121.

The control unit 208 is further provided with respective devices 122, 123, 124, 125 for receiving and sending input and output signals. These input and output signals may comprise waveforms, pulses or other attributes which the input signal receiving devices 122, 125 can detect as information and which can be converted to signals which the calculation unit 120 can process.

These signals are thereafter conveyed to the calculation unit 120. The output signal sending devices 123, 124 are arranged to convert signals received from the calculation unit 120 in order, e.g. by modulating them, to create output signals which can be conveyed to other parts of the vehicle's control system and/or the component/components for which the signals are intended. Each of the connections to the respective devices for receiving and sending input and output signals may take the form of one or more from among a cable, a data bus, e.g. a CAN (Controller Area Network) bus, an MOST (Media Orientated Systems Transport) bus or some other bus configuration, or a wireless connection.

As above, regeneration may in principle be effected in two different ways. One way is by so-called oxygen ($O_2$) based regeneration, also called active regeneration. In active regeneration a chemical process takes place substantially as follows:

$$C + O_2 = CO_2 + heat \qquad\qquad (eq. 1)$$

Active regeneration thus converts carbon plus oxygen gas to carbon dioxide plus heat. However, this chemical reaction is very temperature-dependent and requires relatively high filter temperatures for acceptable reaction rates to be achieved at all. A lowest filter temperature of 500°C is typically required, but a still higher temperature is preferable for regeneration to take place at desired rates.

However, the maximum temperature usable in active regeneration is often limited by tolerances of the components concerned. For example, the particle filter 202 and/or any downstream SCR catalyst often have design limitations with regard to the maximum temperature to which components may be subjected. This means that active regeneration may, owing to components affected, be subject to an unacceptably low maximum permissible temperature. At the same time, a very high lowest temperature is therefore required for any usable reaction rate to be achieved at all. In active regeneration, the soot load in the filter 202 is normally burnt substantially completely. After total regeneration of the filter, its soot level will be substantially 0%.

It is now increasingly common that vehicles are equipped not only with particle filters 202 but also with SCR catalysts 201, in which case active regeneration may entail problems in the form of overheating of the downstream SCR catalyst treatment process.

At least partly for this reason, the present invention applies NO based (passive) regeneration instead of the active regeneration described above. In passive regeneration, nitrogen oxides and carbon oxides are formed in a reaction between carbon and nitrogen dioxide as follows:

$$NO_2 + C = NO + CO \qquad\qquad (eq. 2)$$

The advantage of passive regeneration is that desired reaction rates, and hence the rate at which the filter is emptied, are achieved at lower temperatures. Passive regeneration of particle filters typically takes place at temperatures within the range 200°C - 500°C, although temperatures in the upper part of this range are normally preferable. This substantially lower temperature range than in active regeneration is nevertheless a great advantage in cases where, for example, there are SCR catalysts, since it entails no risk of reaching such a high temperature level as to cause risk of damage to the SCR catalyst.

However, it is difficult and, from a fuel economy perspective, disadvantageous to burn all of the soot in the particle filter 202 during passive regeneration, since the reaction rate for equation 2 above, i.e. the reaction rate between nitrogen dioxide and soot, decreases considerably with decreasing amount of soot in the particle filter. Partial regeneration of the filter is therefore applied here. Such passive partial regeneration may be monitored and controlled so that it is discontinued when a desired soot load in the filter is reached.

In an exhaust cleaning system applying passive regeneration, the soot load will therefore be monitored, and if it exceeds a maximum permissible value a passive partial regeneration will be effected.

The maximum permissible value for the soot load may here, as described above, be between 60 and 80% of a value which represents a maximum possible soot load in the filter. According to an embodiment of the invention, the maximum permissible value for the soot load is about 70% of a value which represents a maximum possible soot load for the filter 202.

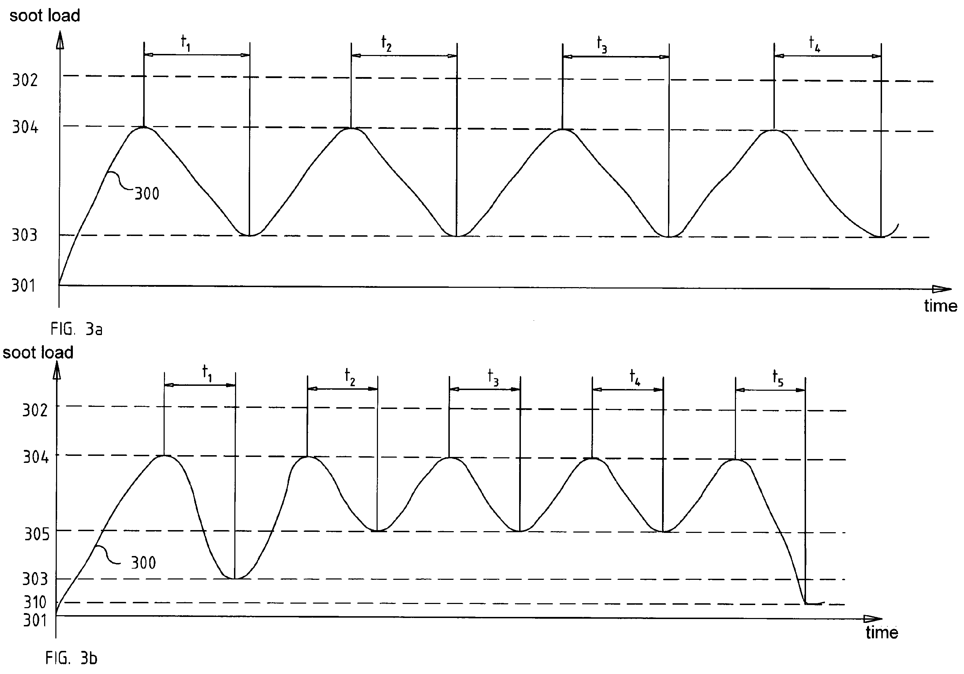

When the soot load reaches this maximum permissible value, a partial regeneration of the particle filter 202 will therefore be effected. This partial regeneration will then be discontinued when the soot load has decreased from the maximum permissible value to a desired regenerated value. The desired regenerated value for the soot load may here be between 30 and 50% of the maximum possible soot load for the filter. According to an embodiment, the desired regenerated value for the soot load is about 40% of this maximum possible soot load. This is depicted schematically in Figure 3a, which illustrates the soot load 300 in a particle filter 202 over time. Both here and elsewhere in this specification, soot load means the load which the system thinks is represented by soot on the basis of pressure drop across the filter 202. As described below, other particles than soot may also contribute to this soot load 300. Figure 3a is only intended to illustrate the principle of soot load increase (accumulation) and decrease (regeneration) in the filter and is not based on actual values. When a particle filter 202 has no soot load, i.e. when it is completely clear of soot and other particles, it has a soot load corresponding to a zero level 301. If the filter is completely full of soot, it has a soot load level corresponding to a maximum possible soot load 302.

When use of a particle filter 202 begins, the soot load rises from the zero level 301 progressively with the deposition of soot in it. During passive regeneration such as applied by the present invention, the level of the soot load 300 is monitored. When the soot load 300 reaches a level corresponding to a maximum permissible value 304, a partial regeneration is effected as above, reducing the soot load 300 to a desired regenerated level 303. According to an embodiment of the invention, this maximum permissible value 304 is determined on the basis of a maximum permissible pressure drop across the filter 202, which is itself determined on the basis of a maximum permissible increase in fuel consumption. As is well known, fuel consumption rises with increasing pressure drop across the filter.

When the soot load 300 reaches this desired regenerated level 303, the partial regeneration is discontinued and the soot load 300 is allowed to rise again towards the maximum permissible level 304. This process recurs as depicted in Figure 3a, in which four such cycles are schematically illustrated.

As depicted in Figure 3a, each partial regeneration proceeds for a certain period of time $t_1$-$t_4$, and these periods

may be substantially equal in length or of different lengths.

Figure 3b depicts schematically a problematical situation for the particle filter. Here the soot load rises normally when use of the filter begins, from the zero level 301 to a maximum permissible level 304 at which a partial regeneration is initiated and proceeds for a period of time $t_1$. In this example, which is intended to illustrate the principles involved in a problem and the solution according to the present invention, the soot load is reduced by this partial regeneration to a desired regenerated level 303 at which regeneration is discontinued and the soot load.300 then rises again towards the maximum permissible level 304. One skilled in the art will appreciate that such fluctuation between the maximum permissible level 304 and the desired regenerated level 303 may take place any number of times before the problem described below arises.

When the soot load again reaches the maximum permissible level 304, a partial regeneration is again initiated to reduce it. However, this partial regeneration may fail to bring the soot load level 300 back to the desired regenerated level 303 but only reach a level 305 which denotes an unsuccessful partial regeneration, as depicted in Figure 3b. This level due to unsuccessful partial regeneration is somewhere between the level for maximum permissible soot load 304 and the level for desired regenerated soot load 303. When a predetermined period of time $t_2$ has passed, the partial regeneration is discontinued and the soot load level 300 is allowed to rise towards the maximum permissible level 304.

Where the soot load level 300 fails during the predetermined time $t_2$ to drop to the desired regenerated level 303, the system will try to analyse the cause. This analysis typically uses a pressure drop across the particle filter to determine the soot load in it. However, as described above, other particles than soot, e.g. ash, may cause the pressure drop and thereby contribute to the system thinking that the cause is the soot load, making it very difficult to decide whether it is the presence of soot and/or ash in the filter that caused the partial regeneration to fail.

This problem is solved by the present invention estimating the ash level in the filter 202 on the basis of a pressure drop across it when it is substantially free from soot. The present invention determines when this estimation of the ash level should be done and prepares the filter 202 for this estimation based on pressure drop across the filter.

According to the invention, a total regeneration of the filter 202 is effected if a predetermined number of partial regenerations fail, i.e. if partial regeneration fails at least once. This total regeneration results in the filter 202 being then substantially free from soot, i.e. in the soot load 300 being close to the zero level 301. After this total regeneration, the ash level is estimated, which may be done on the basis of the pressure drop across the filter 202, since the system then knows that the filter is substantially free from soot and that the pressure drop is therefore substantially due to the ash in it.

This is exemplified in Figure 3b, in which the soot load 300 during partial regeneration over the predetermined time $t_2$ fails to reach the desired regenerated level 303 but only comes down to the level 305 which denotes unsuccessful partial regeneration. During the subsequent partial regeneration over the predetermined time $t_3$, the soot load 300 again drops only to the unsuccessful level 305, i.e. a second partial regeneration fails. Similarly, partial regeneration during the predetermined time $t_4$ again brings the soot load 300 down to only the unsuccessful level 305, i.e. a third partial regeneration fails.

In this example, the predetermined number of unsuccessful partial regenerations is three, but according to various embodiments of the invention it might be between one and ten, preferably between one and three. According to an embodiment, this predetermined number is two.

The above may be implemented such that the number of unsuccessful partial regenerations is counted by a calculator which is incremented each time when a predetermined period of time $t_1$-$t_4$ runs out before the desired regenerated soot load level 303 is reached. This calculator is zeroed if a partial regeneration succeeds in reaching the desired regenerated soot load level 303 within a predetermined period $t_1$-$t_4$.

In the example depicted in Figure 3b, a total regeneration is thereafter effected during the period $t_5$, rendering the filter 202 substantially free from soot, so that the soot load reaches an ash-related level 310 which is relatively close to the zero level 301. As the filter 202 after this total regeneration may be regarded as substantially free from soot, the difference between the ash-related level 310 of the soot load, which is relatively close to the zero level 301, and the zero level 301 may be regarded as due to ash in the filter. The ash level in the filter is therefore estimated after this total regeneration of the filter, i.e. after the period $t_5$ in this example.

After a total regeneration has been done, the backpressure in the particle filter 202, i.e. the pressure drop across it, will be due to ash which has been deposited in the particle filter and cannot be burnt by regeneration. The method according to the invention thus provides a way of arriving at a reliable measure of the amount of ash in the filter 202.

According to an embodiment of the invention, a partial regeneration is regarded as unsuccessful if during a predetermined period of time it fails to reduce the soot load 300 to the desired regenerated value 303. The periods $t_2$-$t_4$ thus serve here as predetermined periods of time. Such predetermined periods may be between 20 minutes and 10 hours, and preferably between 2 and 4 hours. According to an embodiment, they are each about 3 hours long.

Another embodiment of the present invention uses instead at least two modelled soot loads, the first being calculated on the basis of a pressure drop across the filter 202, and the second in the form of a chemically modelled soot load calculated on the basis of a temperature of the filter, a flow of nitrogen oxides ($NO_x$) and a soot flow from the engine 101. In this case, partial regeneration is regarded as unsuccessful if the modelled first soot load results in a higher value for soot load than the chemically modelled soot load.

According to an embodiment of the present invention, total regeneration takes the form of parked regeneration initiated by a driver of the vehicle. Such parked regeneration involves the driver bringing the vehicle to a halt and then activating total regeneration, typically at temperatures within the range 450°C to 600°C, i.e. higher temperatures than for partial regeneration. This total regeneration then burns out substantially all of the soot from the filter 202 so that a correct estimate of the ash level in it can then be made.

According to another embodiment of the present invention, total regeneration takes the form of regeneration during operation, i.e. while the vehicle is being driven by the driver.

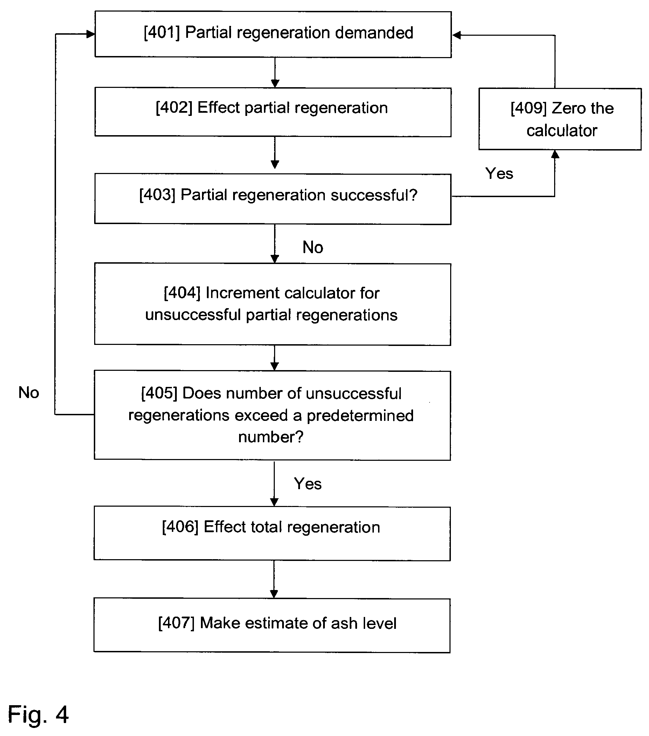

Figure 4 is a flowchart for the method according to the invention. As a first step 401, a passive partial regeneration is demanded when the soot load in the particle filter 202 reaches a maximum permissible level 304. As a second step 402, this passive partial regeneration is effected. A third step 403 assesses whether the passive partial regeneration has been successful, i.e. has reduced the soot load to the desired regenerated value, either by using models of soot loads or by monitoring whether the soot load comes down to a desired regenerated level 303 over a predetermined period of time. If the passive partial regeneration is successful, a zeroing step 409 zeroes a calculator which counts unsuccessful passive partial regenerations, and the method goes back to the first step 401. If the passive partial regeneration fails, the method moves on to a fourth step 404 at which the calculator is incremented.

A fifth step 405 then checks whether the number of unsuccessful regenerations exceeds a predetermined number, i.e. the calculator value is compared with the predetermined number. If the number is smaller than the predetermined number, the method goes back to the first step 401. If the number is larger than the predetermined number, the method moves on to a sixth step 406 for a total regeneration. The method then moves on to a seventh step 407 in which the ash level is estimated.

The present invention further relates to a system adapted to making estimates of ash levels in a particle filter 202. The system according to the invention comprises initiating means adapted to initiating total regeneration of said filter if a predetermined number of passive partial regenerations fail to reduce the soot load to the desired regenerated value. The initiating means is adapted to then initiating estimation of the ash level in the filter 202 after it has been substantially cleared of soot by total regeneration.

The system is further arranged to comprise means for effecting the various embodiments described above of the method according to the invention.

The invention further relates to a vehicle according to Figure 1a, comprising a particle filter 202 and a system according to the invention which is adapted to making an estimate of an ash level in the filter by the method according to the invention.

The present invention is exemplified above in relation to vehicles. The invention is nevertheless also applicable to any means of transport in which exhaust cleaning systems as above are applicable, e.g. in watercraft or aircraft with combustion processes/regeneration processes as above.

**Claims**

1. A method for estimation of an ash level in a particle filter (202) in an exhaust cleaning system (200), whereby

   - a passive partial regeneration of said particle filter (202) is effected when a soot load of said particle filter (202) exceeds a maximum permissible value, which passive partial regeneration is intended to reduce said soot load to a desired regenerated value, and
   - said estimation of said ash level is based on a pressure drop across said particle filter (202) when said particle filter (202) is substantially free from soot,

   **characterised in that**, if said passive partial regeneration is unsuccessful for a predetermined number of times to reduce said soot load to said desired regenerated value,

   - a passive total regeneration of said particle filter (202) is effected, resulting in said particle filter (202) being substantially free from soot, and thereafter
   - said estimate of said ash level is made.

2. A method according to claim 1, whereby a passive partial regeneration is deemed unsuccessful if over a predetermined period of time it fails to reduce said soot load to said desired regenerated value.

3. A method according to claim 2, whereby said predetermined period of time is between 20 minutes and 10 hours, and preferably between 2 and 4 hours.

4. A method according to claim 3, whereby said predetermined period of time is about 3 hours.

5. A method according to claim 1, whereby a passive partial regeneration is deemed unsuccessful if, during normal operation, a modelled first soot load results in a higher value for the soot load than a chemically modelled second soot load,

- said modelled first soot load being calculated on the basis of a pressure drop across said particle filter (202), and
- said chemically modelled soot load being calculated on the basis of a temperature of said particle filter (202), a flow of nitrogen oxides ($NO_x$), and a soot flow from an engine (101) which is connected to said exhaust cleaning system (200).

6. A method according to any one of claims 1-5, whereby said predetermined number of times is within the range 1 to 10 times, and preferably within the range 1 to 3 times.

7. A method according to claim 6, whereby said predetermined number of times is 2.

8. A method according to any one of claims 1-7, whereby said passive total regeneration takes the form of parked regeneration.

9. A method according to claim 8, whereby said parked regeneration is initiated by a driver of a vehicle (100) which is provided with said exhaust cleaning system (200), such that

- the vehicle (100) is brought to a halt by the driver, and
- the regeneration is arranged to be activated by the driver when the vehicle (100) is stationary.

10. A method according to any one of claims 1-7, whereby said passive total regeneration takes the form of regeneration during operation of a vehicle (100) which is provided with said exhaust cleaning system (200).

11. A method according to any one of claims 1-10, whereby said maximum permissible value for said soot load is determined on the basis of a maximum permissible pressure drop across said particle filter (202).

12. A method according to claim 11, whereby said maximum permissible pressure drop is determined on the basis of a maximum permissible increase in fuel consumption, said increase being caused by said pressure drop across said particle filter (202).

13. A method according to either of claims 11 and 12, whereby said maximum permissible value for said soot load is a value of between 60 and 80% of a value corresponding to a maximum possible soot load.

14. A method according to claim 13, whereby said maximum permissible value for said soot load is about 70% of a value corresponding to a maximum possible soot load.

15. A method according to any one of claims 1-14, whereby said desired regenerated value for said soot load is a value of between 30 and 50% of a value corresponding to a maximum possible soot load.

16. A method according to claim 15, whereby said desired regenerated value for said soot load is about 40% of a value corresponding to a maximum possible soot load.

17. A computer programme which comprises programme code and which, when said code is executed in a computer, causes said computer to apply the method according to any of claims 1-16.

18. A computer programme product comprising a computer-readable medium and a computer programme according to claim 17, which programme is contained in said medium which takes the form of any from among ROM (read-only memory), PROM (programmable ROM), EPROM (erasable PROM), flash-memory, EEPROM (electrically EPROM) and hard disc unit.

19. A system adapted to making an estimate of an ash level in a particle filter (202) in an exhaust cleaning system (200), which system comprises

- regeneration means adapted to effecting a passive partial regeneration of said particle filter (202) when a soot load of said particle filter (202) exceeds a maximum permissible value, which passive partial regeneration is intended to reduce said soot load to a desired regenerated value, and
- estimation means adapted to basing said estimation of said ash level on a pressure drop across said particle filter (202) when said particle filter (202) is substantially free from soot,

**characterised in that** said system comprises initiating means adapted, if said passive partial regeneration is unsuccessful for a predetermined number of times to reduce said soot load to said desired regenerated value, to initiating

- a passive total regeneration of said particle filter (202), resulting in said particle filter (202) being substantially free from soot, and thereafter
- said estimation of said ash level.

20. A vehicle (100) **characterised in that** it comprises

- a particle filter (202), and
- a system according to claim 19 which is adapted to making an estimate of an ash level in said particle filter (202).

**Patentansprüche**

1. Verfahren zum Abschätzen eines Ascheanteils in einem Partikelfilter (202) in einem Abgasreinigungssystem (200), wobei

- eine passive Teilregeneration des Partikelfilters (202) bewirkt wird, wenn eine Rußbeladung des Partikelfilters (202) einen maximal zulässigen Wert übersteigt, wobei die passive Teilregeneration bestimmt ist zum Verringern der Rußbeladung auf einen Soll-Regenerationswert, und
- die Abschätzung des Ascheanteils auf einem Druckabfall über dem Partikelfilter (202) basiert, wenn der Partikelfilter (202) im Wesentlichen frei von Ruß ist,

**dadurch gekennzeichnet, dass**, falls die passive Teilregeneration für eine vorbestimmte Anzahl von Malen erfolglos ist, um die Rußbeladung auf den Soll-Regenerationswert zu verringern,

- eine passive Komplettregeneration des Partikelfilters (202) bewirkt wird, was zu dem im Wesentlichen von rußfreien Partikelfilter (202) führt, und danach
- die Abschätzung des Ascheanteils ausgeführt wird.

2. Verfahren nach Anspruch 1, wobei eine passive Teilregeneration als erfolglos erachtet wird, falls es über einen vorbestimmten Zeitraum misslingt, die Rußbeladung auf den Soll-Regenerationswert zu verringern.

3. Verfahren nach Anspruch 2, wobei der vorbestimmte Zeitraum zwischen 20 Minuten und 10 Stunden und vorzugsweise zwischen 2 und 4 Stunden liegt.

4. Verfahren nach Anspruch 3, wobei der vorbestimmte Zeitraum bei ungefähr 3 Stunden liegt.

5. Verfahren nach Anspruch 1, wobei eine passive Teilregeneration als erfolglos erachtet wird, falls während einem normalen Betrieb eine modellierte erste Rußbeladung in einem höheren Wert für die Rußbeladung als eine chemisch modellierte zweite Rußbealdung resultiert, wobei

- die modellierte erste Rußbeladung auf der Basis eines Druckabfalls über dem Partikelfilter (202) berechnet wurde, und
- die chemische modellierte Rußbeladung auf der Basis einer Temperatur des Partikelfilters (202), eines Stickoxidstroms ($NO_x$) und eines Rußstroms von einem mit dem Abgasreinigunssystem (200) verbundenen Motor (101) berechnet wurde.

6. Verfahren nach einem der Ansprüche 1 bis 5, wobei die vorbestimmte Anzahl von Malen innerhalb des Bereichs 1 bis 10 Mal und vorzugsweise innerhalb des Bereichs 1 bis 3 Mal liegt.

**7.** Verfahren nach Anspruch 6, wobei die vorbestimmte Anzahl von Malen 2 ist.

**8.** Verfahren nach einem der Ansprüche 1 bis 7, wobei die passive Komplettregeneration die Form einer Regeneration im geparkten Zustand annimmt.

**9.** Verfahren nach Anspruch 8, wobei die Regeneration im geparkten Zustand durch einen Fahrer eines mit dem Abgasreinigungssystem (200) ausgestatteten Fahrzeugs (100) eingeleitet wird, derart, dass

- das Fahrzeug (100) durch den Fahrer zum Stillstand gebracht wird, und
- die Regeneration durch den Fahrer aktiviert werden kann, wenn das Fahrzeug (100) stationär ist.

**10.** Verfahren nach einem der Ansprüche 1 bis 7, wobei die passive Komplettregeneration die Form einer Regeneration während des Betriebs eines mit dem Abgasreinigungssystem (200) ausgestatteten Fahrzeugs (100) annimmt.

**11.** Verfahren nach einem der Ansprüche 1 bis 10, wobei der maximal zulässige Wert für die Rußbeladung auf der Basis eines maximal zulässigen Druckabfalls über dem Partikelfilter (202) bestimmt wird.

**12.** Verfahren nach Anspruch 11, wobei der maximal zulässige Druckabfall auf der Basis einer maximal zulässigen Erhöhung eines Kraftstoffverbrauchs bestimmt wird, wobei die Erhöhung durch den Druckabfall über dem Partikelfilter (202) verursacht wird.

**13.** Verfahren nach einem der beiden Ansprüche 11 und 12, wobei der maximal zulässige Wert für die Rußbeladung ein Wert zwischen 60 und 80 % eines Werts entsprechend einer maximal möglichen Rußbeladung ist.

**14.** Verfahren nach Anspruch 13, wobei der maximal zulässige Wert für die Rußbeladung bei ungefähr 70 % eines Werts entsprechend einer maximal möglichen Rußbeladung liegt.

**15.** Verfahren nach einem der Ansprüche 1 bis 14, wobei der Soll-Regenerationswert für die Rußbealdung ein Wert zwischen 30 und 50 % eines Werts entsprechend einer maximal möglichen Rußbeladung ist.

**16.** Verfahren nach Anspruch 15, wobei der Soll-Regenerationswert für die Rußbeladung bei ungefähr 40 % eines Werts entsprechen einer maximal möglichen Rußbeladung liegt.

**17.** Computerprogramm, das einen Programmcode umfasst und das dann, wenn der Code in einem Computer ausgeführt wird, den Computer veranlasst, das Verfahren nach einem der Ansprüche 1 bis 16 anzuwenden.

**18.** Computerprogrammprodukt, umfassend ein computerlesbares Medium und ein Computerprogramm nach Anspruch 17, wobei das Programm in dem Medium enthalten ist, das in Form eines von ROM (read-only memory), PROM (programmable ROM), EPROM (erasable PROM), flash-memory, EEPROM (electrically EPROM) oder einer Festplatteneinheit ausgebildet ist.

**19.** System, eingerichtet zum Ausführen einer Schätzung eines Ascheanteils in einem Partikelfilter (202) in einem Abgasreinigungssystem (200), wobei das System umfasst

- Regenerationsmittel, die zum Bewirken einer passiven Teilregeneration des Partikelfilters (202) eingerichtet sind, wenn eine Rußbeladung des Partikelfilters (202) einen maximal zulässigen Wert übersteigt, wobei die passive Teilregeneration zum Verringern der Rußbeladung auf einen Soll-Regenerationswert vorgesehen ist, und
- Bewertungsmittel, die zum Basieren der Bewertung des Ascheanteils auf einem Druckabfall über dem Partikelfilter (202) eingerichtet sind, wenn der Partikelfilter (202) im Wesentlichen frei von Ruß ist,

**dadurch gekennzeichnet, dass** das System Einleitmittel umfasst, die eingerichtet sind um dann, wenn die passive Teilregeneration für eine vorbestimmte Anzahl von Malen zum Reduzieren der Rußbeladung auf den Soll-Regenerationswert erfolglos ist, einzuleiten:

- eine passive Komplettregeneration des Partikelfilters (202), die zu dem im Wesentlichen von rußfreien Partikelfilter (202) führt, und danach
- der Abschätzung des Ascheanteils.

**20.** Fahrzeug (100), **dadurch gekennzeichnet, dass** es umfasst

- einen Partikelfilter (202), und
- ein System nach Anspruch 19, das eingerichtet ist zum Ausführen einer Abschätzung eines Ascheanteils in dem Partikelfilter (202).


**Revendications**

**1.** Procédé pour l'estimation d'un niveau de cendres dans un filtre à particules (202) dans un système de nettoyage d'échappement (200), dans lequel :

- une régénération partielle passive dudit filtre à particules (202) est effectuée lorsqu'une charge de suie dudit filtre à particules (202) dépasse une valeur maximale admissible, cette régénération partielle passive visant à réduire ladite charge de suie à une valeur régénérée désirée, et
- ladite estimation dudit niveau de cendres est basée sur une chute de pression à travers ledit filtre à particules (202) lorsque ledit filtre à particules (202) est sensiblement exempt de suie,

**caractérisé en ce que**, si ladite régénération partielle passive ne réussit pas un nombre prédéterminé de fois à réduire ladite charge de suie à ladite valeur régénérée désirée,

- une régénération totale passive dudit filtre à particules (202) est effectuée, ceci ayant pour résultat que ledit filtre à particules (202) est sensiblement exempt de suie et, après quoi :
- ladite estimation dudit niveau de cendres est effectuée.

**2.** Procédé selon la revendication 1, selon lequel une régénération partielle passive est estimée comme non réussie si, au cours d'une période de temps prédéterminée, elle échoue à réduire ladite charge de suie à ladite valeur régénérée désirée.

**3.** Procédé selon la revendication 2, selon lequel ladite période de temps prédéterminée est comprise entre 20 minutes et 10 heures, et, de préférence, entre 2 et 4 heures.

**4.** Procédé selon la revendication 3, selon lequel ladite période de temps prédéterminée est d'environ 3 heures.

**5.** Procédé selon la revendication 1, selon lequel une régénération passive est estimée comme non réussie si, lors d'un fonctionnement normal, une première charge de suie modélisée produit en résultat pour la charge de suie une valeur supérieure à celle d'une deuxième charge de suie modélisée chimiquement,

- ladite première charge de suie modélisée étant calculée sur la base d'une chute de pression à travers ledit filtre à particules (202), et
- ladite charge de suie modélisée chimiquement étant calculée sur la base d'une température dudit filtre à particules (102), d'un écoulement d'oxydes d'azote ($NO_x$), et d'un écoulement de suie à partir d'un moteur (101) qui est relié audit système de nettoyage d'échappement (200).

**6.** Procédé selon l'une quelconque des revendications 1 à 5, selon lequel ledit nombre prédéterminé de fois est compris dans la plage entre 1 et 10 fois, et, de préférence, dans la plage entre 1 et 3 fois.

**7.** Procédé selon la revendication 6, selon lequel ledit nombre prédéterminé de fois est de 2.

**8.** Procédé selon l'une quelconque des revendications 1 à 7, dans lequel ladite régénération totale passive prend la forme d'une régénération en stationnement.

**9.** Procédé selon la revendication 8, selon lequel ladite régénération en stationnement est déclenchée par un conducteur d'un véhicule (100) qui est muni dudit système de nettoyage d'échappement (200), de telle sorte que :

- le véhicule (100) est amené à l'arrêt par le conducteur, et
- la régénération est configurée de façon à être activée par le conducteur lorsque le véhicule (100) est en stationnement.

**10.** Procédé selon l'une quelconque des revendications 1 à 7, selon lequel ladite régénération totale passive prend la forme d'une régénération durant le fonctionnement d'un véhicule (100) qui est muni dudit système de nettoyage d'échappement (200).

**11.** Procédé selon l'une quelconque des revendications 1 à 10, selon lequel ladite valeur maximale admissible pour ladite charge de suie est déterminée sur la base d'une chute de pression maximale admissible à travers ledit filtre à particules (202).

**12.** Procédé selon la revendication 11, selon lequel ladite chute de pression maximale admissible est déterminée sur la base d'une augmentation maximale admissible de la consommation de carburant, ladite augmentation étant provoquée par ladite chute de pression à travers ledit filtre à particules (202).

**13.** Procédé selon l'une ou l'autre des revendications 11 et 12, selon lequel ladite valeur maximale admissible pour ladite charge de suie est une valeur comprise entre 60 et 80 % d'une valeur correspondant à une charge de suie maximale possible.

**14.** Procédé selon la revendication 13, selon lequel ladite valeur maximale admissible pour ladite charge de suie est d'environ 70 % d'une valeur correspondant à une charge de suie maximale possible.

**15.** Procédé selon l'une quelconque des revendications 1 à 14, selon lequel ladite valeur régénérée désirée pour ladite charge de suie est une valeur comprise entre 30 et 50 % d'une valeur correspondant à une charge de suie maximale possible.

**16.** Procédé selon la revendication 15, selon lequel ladite valeur régénérée désirée pour ladite charge de suie est d'environ 40 % d'une valeur correspondant à une charge de suie maximale possible.

**17.** Programme informatique, qui comprend un code de programme, et qui, lorsque ledit code est exécuté sur un ordinateur, provoque l'application par ledit ordinateur du procédé selon l'une quelconque des revendications 1 à 16.

**18.** Produit de programme informatique, comprenant un support lisible par ordinateur et un programme informatique selon la revendication 17, ce programme étant contenu dans ledit support, qui prend la forme de l'une quelconque parmi une ROM (mémoire morte), une PROM (mémoire morte programmable), une EPROM (mémoire morte programmable effaçable), une mémoire flash, une EEPROM (mémoire morte programmable effaçable électriquement) et une unité de disque dur.

**19.** Système adapté à effectuer une estimation d'un niveau de cendres dans un filtre à particules (202) dans un système de nettoyage d'échappement (200), ce système comprenant :

- des moyens de régénération adaptés à effectuer une régénération partielle passive dudit filtre à particules (202) lorsqu'une charge de suie dudit filtre à particules (202) dépasse une valeur maximale admissible, cette régénération partielle passive visant à réduire la charge de suie à une valeur de régénération désirée, et
- des moyens d'estimation adaptés à baser ladite estimation dudit niveau de cendres sur une chute de pression à travers ledit filtre à particules (202) lorsque ledit filtre à particules (202) est sensiblement exempt de suie,

**caractérisé en ce que** ledit système comprend des moyens de déclenchement adaptés, si ladite régénération partielle passive ne réussit pas un nombre prédéterminé de fois à réduire ladite charge de suie à ladite valeur régénérée désirée, à déclencher :

- une régénération totale passive dudit filtre à particules (202), ceci ayant pour résultat que ledit filtre à particules (202) est sensiblement exempt de suie, et après quoi :
- ladite estimation du niveau de cendres.

**20.** Véhicule (100), **caractérisé en ce qu'**il comprend :

- un filtre à particules (202), et
- un système selon la revendication 19, qui est adapté à réaliser une estimation d'un niveau de cendres dans ledit filtre à particules (202).

FIG. 1a

100

111

113

104

102

103

101

106

108

107

105

112

200

114

EP 2 612 003 B1

Fig. 1b

# Fig. 2

FIG. 3a

FIG. 3b

[401] Partial regeneration demanded

[402] Effect partial regeneration

[403] Partial regeneration successful?

Yes

[409] Zero the calculator

No

[404] Increment calculator for unsuccessful partial regenerations

No

[405] Does number of unsuccessful regenerations exceed a predetermined number?

Yes

[406] Effect total regeneration

[407] Make estimate of ash level

Fig. 4

**EP 2 612 003 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030131592 A